(19) **Europäisches Patentamt / European Patent Office / Office européen des brevets**

(11)  **EP 3 729 143 B1**

(12)  **FASCICULE DE BREVET EUROPEEN**

(45) Date de publication et mention
de la délivrance du brevet:
**27.10.2021  Bulletin 2021/43**

(21) Numéro de dépôt: **18822103.0**

(22) Date de dépôt: **20.12.2018**

(51) Int Cl.:
*G01T 1/29* (2006.01)     *G01T 1/36* (2006.01)

(86) Numéro de dépôt international:
**PCT/EP2018/086405**

(87) Numéro de publication internationale:
**WO 2019/122244 (27.06.2019 Gazette 2019/26)**

(54)  **PROCÉDÉ D'ANALYSE À L'AIDE D'UN DÉTECTEUR DE PARTICULES ALPHA**

ANALYSEVERFAHREN UNTER VERWENDUNG EINES DETEKTORS EINES ALPHA-TEILCHENS

ANALYSING METHOD USING A DETECTOR OF ALPHA PARTICLES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **22.12.2017  FR 1762989**

(43) Date de publication de la demande:
**28.10.2020  Bulletin 2020/44**

(73) Titulaires:
  • **Orano Mining**
    **92400 Courbevoie (FR)**
  • **AI4R**
    **44300 Nantes (FR)**

(72) Inventeurs:
  • **DONNARD, Jérôme**
    **44100 NANTES (FR)**
  • **DUVAL, Samuel**
    **44300 NANTES (FR)**
  • **OGER, Tugdual**
    **44300 NANTES (FR)**
  • **LEFEUVRE, Hugo**
    **44000 NANTES (FR)**
  • **TOUBON, Hervé**
    **78690 LES ESSARTS-LE-ROI (FR)**
  • **DESCOSTES, Michael**
    **75008 PARIS (FR)**

(74) Mandataire: **Lavoix**
    **2, place d'Estienne d'Orves**
    **75441 Paris Cedex 09 (FR)**

(56) Documents cités:
**EP-A1- 1 343 194      WO-A1-2006/008419
WO-A1-2011/039473**

  • **SARDINI PAUL ET AL: "Quantitative
    autoradiography of alpha particle emission in
    geo-materials using the Beaver(TM) system",
    NUCLEAR INSTRUMENTS & METHODS IN
    PHYSICS RESEARCH. SECTION A, vol. 833, 4
    juillet 2016 (2016-07-04), pages 15-22,
    XP029716110, ISSN: 0168-9002, DOI:
    10.1016/J.NIMA.2016.07.003**

**Description**

La présente invention concerne un procédé d'analyse, à l'aide d'un détecteur de particules alpha, d'un échantillon comprenant au moins un radionucléide émetteur d'une pluralité de particules alpha.

Les particules alpha ou rayons alpha sont une forme de rayonnement émis par des noyaux instables de grande masse atomique. Elles sont constituées de deux protons et de deux neutrons combinés en une particule identique au noyau d'hélium 4 (hélion). Les particules alpha sont émises par des noyaux radioactifs (radionucléides), comme l'uranium ou le radium, au cours d'un processus nommé « désintégration alpha ». Durant ce phénomène, le radionucléide éjecte une particule alpha et se transforme en un noyau de nombre de masse inférieur.

L'analyse du rayonnement alpha est par exemple utilisée dans le domaine de la géologie pour caractériser la présence d'uranium 238 ou de thorium 232 et de leurs descendants. On trouve également des applications dans le domaine médical et plus généralement dans tous les domaines des sciences du vivant ou de l'environnement, par exemple pour imager des tissus animaux ou végétaux, ou détecter la présence de radionucléides tels que le polonium 210.

La spectrométrie alpha est une technique d'analyse utilisé pour déterminer la nature du radioélément émetteur alpha avec une grande précision. Ces mesures sont par exemple réalisées à l'aide d'un détecteur à diodes de silicium ou à scintillateur liquide. Cependant, les mesures réalisées ne permettent pas d'obtenir une distribution spatiale de l'activité des radioéléments présents dans l'échantillon.

L'autoradiographie est une autre technique d'analyse d'un échantillon qui permet de caractériser, par exemple à l'aide d'un écran phosphore, la distribution spatiale des radionucléides émetteurs alpha sans toutefois permettre de déterminer la nature des radionucléides. Sardini et al. dans l'article intitulé « Quantitative autoradiography of alpha particle emission in geo-materials using the Beaver™ system », publié dans Nuclear Instruments & Methods in Physics Research, vol. 833, pages 15-22, en 2016, décrit l'utilisation de l'autoradiographie dans des échantillons de roches contenant de l'uranium.

Ainsi, la caractérisation de la nature et de la distribution spatiale des radionucléides d'un échantillon fait appel à deux techniques d'analyse distinctes et à des détecteurs de nature différente. Par conséquent, la caractérisation de l'échantillon est longue et fastidieuse. De plus, les résolutions des deux méthodes sont souvent différentes l'une de l'autre car elles dépendent également de la nature du détecteur utilisé, ce qui rend difficile l'intégration et l'interprétation conjointe de ces deux types de mesures.

L'invention a pour but de pallier ces inconvénients en proposant un procédé d'analyse à l'aide d'un détecteur de particules alpha qui permette une caractérisation simple et rapide de la nature et de la distribution spatiale des radionucléides présents dans l'échantillon.

Pour ce faire, l'invention a pour objet un procédé d'analyse à l'aide d'un détecteur de particules alpha, d'un échantillon comprenant au moins un radionucléide émetteur d'une pluralité de particules alpha, le détecteur comprenant un milieu de détection et une pluralité de cellules de mesure adaptées pour mesurer au moins un signal incident généré par une interaction de la particule alpha avec ledit milieu de détection, le détecteur étant conçu pour fournir une image autoradiographique dudit échantillon, le procédé étant selon la revendication 1.

Ainsi, le procédé selon l'invention permet de caractériser la nature et la distribution spatiale des radionucléides de l'échantillon en utilisant un unique détecteur, simplement et rapidement. Dans le cadre de l'invention, le détecteur est un détecteur gazeux.

Suivant des modes particuliers de réalisation, le procédé selon l'invention comporte l'une ou plusieurs des caractéristiques des revendications 2 à 12, prises isolément ou selon toutes les combinaisons techniquement possibles.

D'autres aspects et avantages de l'invention apparaitront à la lecture de la description qui suit, donnée à titre d'exemple et faite en référence aux dessins annexés parmi lesquels :

- la figure 1 est une représentation schématique d'un détecteur gazeux utilisé pour mettre en œuvre le procédé selon un mode de réalisation ;
- la figure 2 est un diagramme représentant les différentes étapes, sous-étapes et opérations d'un procédé selon l'invention ;
- la figure 3 est une représentation graphique des charges déposées par une particule alpha dans le détecteur de la figure 1 selon l'axe X de l'anode du détecteur ;
- la figure 4 est une représentation graphique de la distribution de la valeur du kurtosis utilisée pour sélectionner les particules alpha ayant traversées le détecteur de part en part ;
- la figure 5 est une représentation graphique de la distribution du ratio de l'énergie déposée sur la longueur de la trajectoire parcourue par la particule alpha pour une source de calibration au radium 226 ;
- la figure 6 est une représentation graphique du spectre en énergie de la source de calibration au radium 226, après application de la calibration ;
- la figure 7 est une représentation graphique d'un spectre en énergie obtenu avec le procédé selon l'invention.

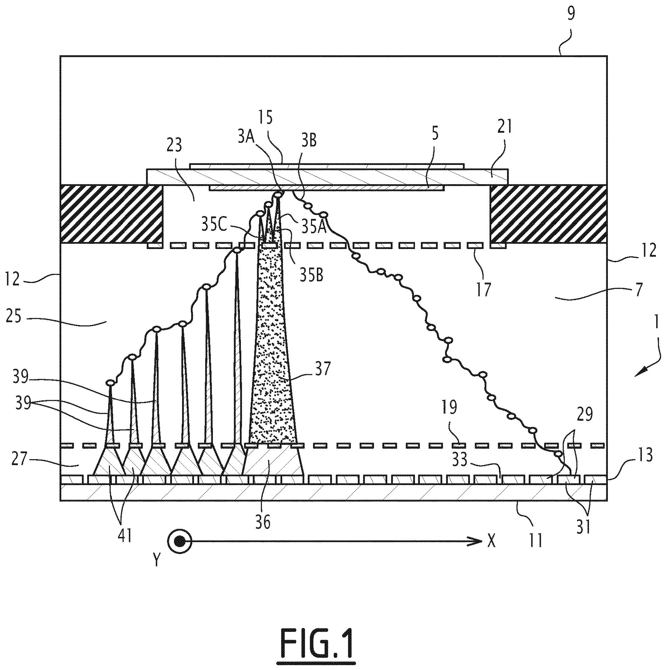

Le procédé selon l'invention concerne un procédé d'analyse à l'aide d'un détecteur 1 de particules alpha 3A, 3B, d'un échantillon 5 comprenant au moins un radionucléide émetteur d'une pluralité de particules alpha 3A, 3B (figure 1).

Le détecteur 1 est conçu pour fournir une image autoradiographique de l'échantillon 5.

Une image autoradiographique est une image de la distribution spatiale des radionucléides émetteurs alpha au sein de l'échantillon 5.

Selon l'invention, le détecteur 1 de particules alpha 3A, 3B est un détecteur gazeux tel que représenté sur la figure 1.

Le détecteur 1 est sensiblement similaire au détecteur gazeux décrit dans le document WO 2011/039473 A1. Dans ce qui suit, seules les caractéristiques du détecteur 1 nécessaires à la compréhension du procédé d'analyse selon l'invention sont précisées en se référant à la figure 1.

Le détecteur 1 comprend une enceinte 7 définie par deux parois principales 9, 11 opposées et parallèles entre elles et des parois latérales 12.

Les parois principales 9, 11 ont par exemple une surface comprise entre 1 cm x 1 cm et 30 cm x 30 cm, par exemple 23 cm x 23 cm.

L'enceinte 7 contient un milieu de détection adapté pour émettre des électrons primaires sous l'effet du rayonnement alpha émis par l'échantillon 5.

Le milieu de détection est typiquement constitué d'un mélange gazeux circulant dans l'enceinte 7 entre une entrée et une sortie (non représentées).

Le mélange gazeux est par exemple un mélange entre un gaz rare, par exemple du xénon, et un gaz polyatomique, par exemple du $CH_4$.

Le mélange gazeux est avantageusement à une pression comprise entre 0,1 bar et 5 bars, par exemple 1 bar.

L'enceinte 7 a typiquement une épaisseur comprise entre 0,5 cm et 20 cm, par exemple 1 cm.

Le détecteur 1 comprend une anode 13, une cathode 15, une première électrode 17 et une deuxième électrode 19.

Typiquement, l'anode 13, la cathode 15, la première électrode 17 et la deuxième électrode 19 sont parallèles entre elles et parallèles aux deux parois principales 9, 11 de l'enceinte 7.

La cathode 15 est par exemple un adhésif conducteur, par exemple un adhésif de cuivre, collé sur une face d'une lame de verre 21, l'échantillon 5 étant disposé sur une face opposée de la lame de verre 21.

La cathode 15 et la première électrode 17 définissent entre elles un premier espace d'amplification 23.

La première électrode 17 et la deuxième électrode 19 définissent entre elles un espace de dérive 25.

La deuxième électrode 19 et l'anode 13 définissent entre elles un deuxième espace d'amplification 27.

Les phénomènes d'amplification et de dérive sont décrits dans la suite de la description.

La première électrode 17 et la deuxième électrode 19 sont par exemple des microgrilles de type MICROMEGAS telles que décrites dans WO 2011/039473 A1.

Avantageusement, des moyens de polarisation (non représentés) sont connectés à la cathode 15, à l'anode 13, à la première électrode 17 et à la deuxième électrode 19. Ils permettent de porter la cathode 15 à un potentiel $V_1$, l'anode 13 à un potentiel $V_2$, la première électrode 17 à un potentiel $V_3$ et la deuxième électrode 19 à un potentiel $V_4$.

Typiquement, ces potentiels vérifient la relation $V_2 > V_4 > V_3 > V_1$.

Les moyens de polarisation permettent ainsi de créer des champs électriques $E_1$, $E_2$, $E_3$ respectivement dans le premier espace d'amplification 23, l'espace de dérive 25 et le deuxième espace d'amplification 27.

Les champs électriques $E_1$ et $E_3$ dans le premier espace d'amplification 23 et le deuxième espace d'amplification 27 sont typiquement supérieurs à 3 kV/cm.

Le champ électrique $E_2$ dans l'espace de dérive 25 est par exemple inférieur à 3 kV/cm.

Les potentiels $V_1$, $V_2$, $V_3$ et $V_4$ sont avantageusement inférieurs à quelques kV par exemple 3 kV.

Le détecteur 1 comprend une pluralité de cellules de mesure 29 adaptées pour mesurer au moins un signal incident généré par une interaction de la particule alpha 3A, 3B avec le milieu de détection du détecteur 1.

Pour le détecteur 1 gazeux décrit ci-dessus, les cellules de mesure 29 sont formées par des anodes élémentaires ou pavés 31 de l'anode 13.

L'anode 13 est par exemple du type décrite dans le document WO 2011/039473 A1.

Les pavés 31 sont typiquement séparés les uns des autres par des espaces 33 et formant un réseau bidimensionnel de mesure en damier dont les rangées sont alignées selon des axes de coordonnées X et Y perpendiculaires.

Chaque pavé 31 forme par exemple un carré de moins d'un millimètre de côté, par exemple de 650 μm. Les pavés 31 sont alternativement affectés à la lecture de l'une ou l'autre des coordonnées X et Y. Deux pavés 31 voisins ne mesurent pas la même position selon la même coordonnée. L'espace 33 entre les pavés 31 est le plus faible possible, tout en permettant d'isoler chaque pavé 31 du pavé 31 voisin. Par exemple, l'espace 33 est inférieur ou égal à 100 μm.

La structure de chaque pavé 31 est par exemple similaire à celle décrite dans le document WO 2011/039473 A1.

Le signal mesuré par les pavés 31 est typiquement une charge électronique incidente.

Les pavés 31 permettent de convertir une charge électronique incidente en un courant électrique proportionnel à ladite charge.

L'échantillon 5 peut comporter un seul type de radionucléide ou un mélange de radionucléides différents.

Les radionucléides sont typiquement d'origine naturelle ou artificielle.

Par exemple, les radionucléides sont l'uranium 238 et/ou le thorium 232 et leurs descendants.

En variante, les radionucléides sont des actinides artificiels comme par exemple le plutonium.

L'échantillon 5 est par exemple un échantillon de roche, de tissu végétal, animal ou humain.

L'échantillon 5 est typiquement une couche mince ayant une épaisseur comprise entre 5 $\mu$m et 100 $\mu$m, par exemple 20 $\mu$m.

L'échantillon 5 a par exemple des dimensions latérales avantageusement inférieures au champ de vue du détecteur 1, i.e. les dimensions de l'anode 13.

Le champ de vue du détecteur 1 correspond à l'angle solide au travers duquel le détecteur 1 est sensible au rayonnement des particules alpha 3A, 3B.

L'échantillon 5 est typiquement déposé sur la lame de verre 21, de manière à maintenir l'échantillon sensiblement parallèle à l'anode 13.

La lame de verre 21 a typiquement une épaisseur d'un millimètre.

En variante, l'échantillon 5 est déposé sur une pièce métallique.

Avantageusement, la surface de l'échantillon 5 est sensiblement lisse et sensiblement parallèle à l'électrode 17.

Avantageusement, la préparation de l'échantillon 5 comprend une étape de métallisation de la surface de l'échantillon 5, par exemple à l'or/palladium, permettant d'assurer une polarisation homogène de la surface de l'échantillon 5. Cette préparation est typiquement identique à celle, couramment utilisée, d'échantillons pour la microscopie électronique à balayage.

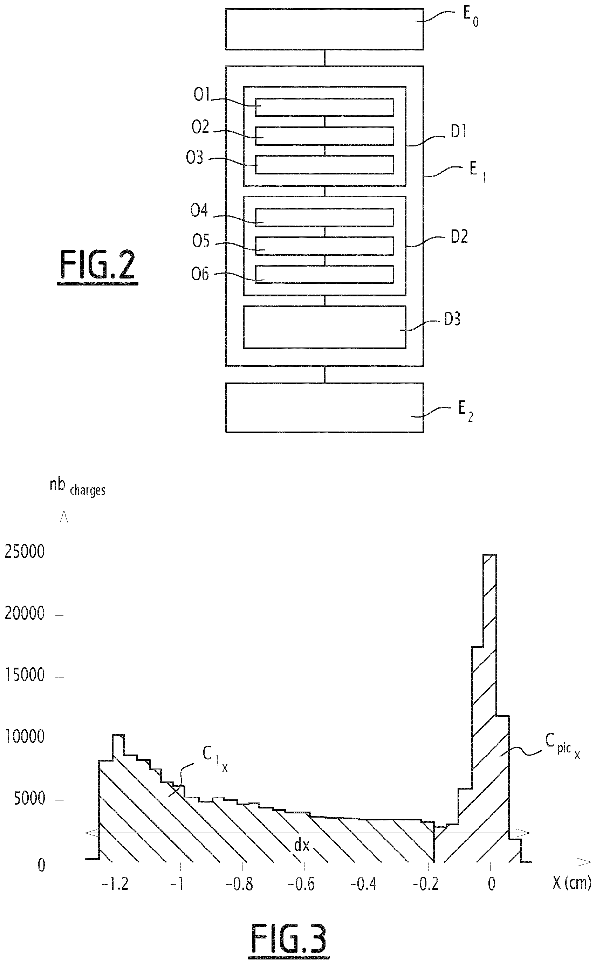

Un procédé d'analyse (figure 2) mis en œuvre au moyen d'un détecteur 1 gazeux tel que décrit plus haut va maintenant être détaillé ci-dessous.

En référence à la figure 1, une particule alpha 3A, 3B est émise par l'échantillon 5 au niveau de la face principale 9 de l'enceinte 7 du détecteur 1 gazeux. La particule alpha 3A, 3B traverse l'enceinte du détecteur 1 et interagit avec le milieu gazeux en générant des électrons primaires qui diffusent et se multiplient dans l'enceinte 7 du détecteur 1 depuis la cathode 15 jusqu'à l'anode 13.

Le procédé comprend une étape de détermination E1 d'une énergie initiale de chaque particule alpha 3A, 3B émise. L'étape de détermination E1 comprend une répétition de trois sous-étapes D1, D2 et D3, pour chaque particule alpha 3A, 3B.

La première sous-étape D1 comprend une détermination d'une position correspondant à une première interaction de la particule alpha 3A, 3B avec le milieu de détection du détecteur 1 de particules alpha 3A, 3B en utilisant au moins une cellule de mesure 29.

La première sous-étape D1 permet la localisation du radionucléide dans l'échantillon 5 qui est à l'origine de l'émission de la particule alpha 3A, 3B.

Avantageusement, la première sous-étape D1 comprend au moins une opération d'amplification de l'interaction de la particule alpha 3A, 3B avec le détecteur 1 de particules alpha 3A, 3B, à l'aide d'au moins un champ électrique.

Selon le mode de réalisation préféré dans lequel le détecteur 1 de particules alpha 3A, 3B est un détecteur gazeux, la première sous-étape D1 comprend l'amplification de l'interaction de la particule alpha 3A, 3B avec les atomes de gaz présents dans l'enceinte 7 du détecteur 1.

Ainsi, dans le mode de réalisation préféré, la première sous-étape D1 comprend une première opération d'amplification O1 dans le premier espace d'amplification 23.

Le champ électrique $E_1$ qui règne à l'intérieur du premier espace d'amplification 23 accélère les électrons créés par l'interaction entre la particule alpha 3A, 3B et le milieu gazeux. Chaque électron entre en collision avec un atome de gaz et l'ionise avec la libération d'un nouvel électron. Les deux électrons ionisent à nouveau deux atomes de gaz qui libèrent à leur tour un électron chacun. Ainsi, par effet d'avalanche, de plus en plus d'électrons sont créés entre la cathode 15 et la première électrode 17.

Avantageusement, la première opération d'amplification O1 est réalisée au plus proche de l'échantillon 5. Ceci permet de maximiser l'effet d'avalanche électronique et d'obtenir un pic de charge électronique important correspondant aux charges matérialisées par un trapèze 36 sur la figure 1.

Comme visible sur la figure 1, la particule alpha 3A, 3B interagit successivement avec plusieurs atomes de gaz dans le premier espace d'amplification 23. Chacune de ces interactions est amplifiée par effet d'avalanche électronique et participe au pic de charge matérialisé par un trapèze 36 sur la figure 1.

Les électrons 35A, 35B et 35C générés par le phénomène d'avalanche électronique dans le premier espace d'amplification 23 diffusent ensuite dans l'espace de dérive 25. L'espace de dérive 25 permet de transférer les charges électroniques 39 et 37 jusqu'à l'anode 13.

Avantageusement, la première sous-étape D1 comporte une deuxième opération d'amplification O2 dans le deuxième espace d'amplification 27 par effet d'avalanche électronique, de manière similaire à ce qui a été décrit plus haut.

La sous-étape D1 comprend alors une opération de détermination O3 de la position moyenne (X0, Y0), selon l'axe X et l'axe Y de l'anode 13, de la première interaction entre la particule alpha 3A, 3B et le milieu gazeux, à l'aide des pavés 31 de l'anode 13.

La position d'entrée de la particule alpha 3A, 3B dans l'espace d'amplification 23 est typiquement déterminée en utilisant les pavés 31, respectivement affectés à la mesure selon l'axe X et selon l'axe Y, recevant la charge électronique en sortie de l'espace d'amplification 27.

La position de la première interaction de la particule alpha 3A, 3B avec le milieu de détection du détecteur 1 est alors avantageusement déterminée à partir d'une répartition des signaux incidents mesurés par les cellules de mesure 29.

Dans l'exemple présenté ci-dessus, la position moyenne (X0, Y0) est déterminée à partir de la répartition des charges électroniques incidentes mesurées par les pavés 31 de l'anode 13.

La position moyenne ainsi déterminée correspond alors à la position au sein de l'échantillon 5 du radionucléide à l'origine de l'émission de la particule alpha 3A, 3B.

La mise en œuvre de la sous-étape D1 suppose que la trajectoire des électrons créés par l'interaction entre la particule alpha 3A, 3B et par le phénomène d'avalanche électronique s'effectue en ligne droite selon la direction des champs électriques dans les espaces d'amplification 23, 27 et de dérive 25, sans déviation d'angle importante.

Après avoir traversé le premier espace d'amplification 23, la particule alpha 3A, 3B poursuit son parcours dans l'espace de dérive 25. La particule alpha 3A, 3B interagit alors successivement avec des atomes du milieu gazeux de l'espace de dérive et génère des électrons 39 qui diffusent dans l'espace de dérive 25 jusqu'au deuxième espace d'amplification 27 où les charges électroniques 41 sont amplifiées par effet d'avalanche électronique de manière similaire à ce qui a été décrit précédemment puis détectées par les pavés 31 de l'anode 13.

Le procédé comprend une sous-étape de détermination D2 de l'énergie déposée par la particule alpha 3A, 3B à l'intérieur du détecteur 1 de particules alpha 3A, 3B en utilisant le signal incident mesuré.

Typiquement, la sous-étape D2 comprend une opération O4 de mesure des charges 41, 36 générées successivement le long d'une trajectoire de la particule alpha 3A, 3B à l'intérieur du détecteur 1.

Les charges électroniques 41 et 36 sont typiquement diffusées dans l'espace de dérive 25 et amplifiées dans les deux espaces d'amplification 23 et 27.

Ces mesures sont effectuées en utilisant les pavés 31 de l'anode.

La figure 3 présente un exemple de distribution de charges électroniques mesurées par l'anode 13 selon l'axe X.

La position du pic de charge électronique créé dans le premier espace d'amplification 23 du détecteur 1, correspondant à la première interaction de la particule alpha 3A, 3B avec le milieu de détection du détecteur 1, est localisée en X=0.

L'énergie déposée est reliée au nombre d'électrons primaires par la relation :

$$E_{dep} = W \times nb_{primaires} \quad (1)$$

$W$ est l'énergie moyenne d'ionisation dans le gaz et $nb_{primaires}$ est le nombre d'électrons primaires. L'énergie moyenne d'ionisation est dépendante du mélange gazeux. La valeur moyenne typiquement retenue pour des mélanges gazeux vaut 30 eV.

La charge totale $C_{totale_i}$ mesurée le long de l'axe i de l'anode 13 s'écrit :

$$C_{totale_i} = n_1 a_1 a_2 e + n_2 a_2 e \quad (2)$$

$n_1$ est un nombre de charges primaires générées dans le premier espace d'amplification 23 par l'interaction de la particule alpha 3A, 3B avec le milieu de détection.

$n_2$ est un nombre de charges primaires générées dans l'espace de dérive 25 par l'interaction de la particule alpha 3A, 3B avec le milieu de détection.

$a_1$ est un gain d'amplification associé à l'espace d'amplification 23.

$a_2$ est un gain d'amplification associé à l'espace d'amplification 27.

e est la charge d'un électron.

$i=x$ ou $i=y$, selon que les calculs sont effectués avec la distribution de charges mesurée selon l'axe X ou l'axe Y de l'anode 13.

En référence à la figure 3, la charge associée à la première partie de la distribution de charges $C_{1_i}$ s'écrit :

$$C_{1_i} = n_2 a_2 e \quad (3)$$

La charge associée à la deuxième partie de la distribution de charges $C_{pic_i}$ correspondant à la charge mesurée au niveau du pic dû aux charges déposées dans le premier espace d'amplification 23 ayant subi l'amplification du premier et du deuxième espace d'amplification 23 et 27 s'écrit :

$$C_{pic_i} = n_1 a_1 a_2 e \quad (4)$$

La charge $C_{extrapolation_i}$ déposée dans le premier espace d'amplification 23 qui serait mesurée si le gain $a_1$ dans le premier espace d'amplification 23 était unitaire, s'écrit :

$$C_{extrapolation_i} = n_1 a_2 e \quad (5)$$

$C_{pic_i}$ peut alors s'écrire :

$$C_{pic_i} = C_{extrapolation_i} a_1 \quad (6)$$

Si $a_1 = 1$ (gain unitaire) alors $C_{pic_i}$ s'écrit :

$$C_{pic_i} = C_{extrapolation_i} \quad (7)$$

$C_{totale_i}$ peut donc s'écrire sous la forme :

$$C_{totale_i} = C_{pic_i} + C_{1_i} \quad (8)$$

Par définition, la charge déposée par la particule alpha 3A, 3B dans le milieu de détection $C_{dep_i}$ peut s'écrire sous la forme :

$$C_{dep_i} = n_1 e + n_2 e = \frac{(n_1 a_2 e + n_2 a_2 e)}{a_2} = \frac{\left(C_{extrapolation_i} + C_{1_i}\right)}{a_2} \quad (9)$$

Donc, on obtient :

$$C_{1_i} = a_2 C_{dep_i} - C_{extrapolation_i} \quad (10)$$

et

$$C_{totale_i} = C_{pic_i} + C_{dep_i} a_2 - C_{extrapolation_i} \quad (11)$$

La charge déposée $C_{dep_i}$ s'écrit alors :

$$C_{dep_i} = \left(C_{totale_i} + C_{extrapolation_i} - C_{pic_i}\right)/a_2 \quad (12)$$

Les charges $C_{totale_i}$ et $C_{pic_i}$ sont typiquement calculées en sommant les valeurs de chaque colonne verticale correspondante de l'histogramme de distribution de charge tel que par exemple représenté sur la figure 3.
La charge déposée totale $C_{dep_{totale}}$ par la particule alpha 3A, 3B est obtenue en sommant la charge déposée $C_{dep_x}$ selon l'axe X et la charge déposée $C_{dep_y}$ selon l'axe Y.
La charge déposée totale $C_{dep_{totale}}$ s'écrit également :

$$C_{dep_{totale}} = e \times nb_{primaires} \quad (13)$$

On en déduit donc l'équation suivante pour l'énergie déposée totale par la particule alpha 3A, 3B dans le milieu de détection du détecteur 1 :

$$E_{dep_{totale}} = \frac{C_{dep_{totale}} \times W}{e} \quad (14)$$

Avantageusement, la sous-étape D2 comprend une opération d'identification O5 des particules alpha 3B traversant le détecteur 1 de particules alpha 3A, 3B de part en part.

En effet, comme visible sur la figure 1, la nature et la géométrie du détecteur 1 de particules alpha 3A, 3B induit deux types d'évènements : la particule alpha 3B traverse le détecteur 1 de part en part ou la particule alpha 3A est calorimétrisée dans le gaz et s'arrête à l'intérieur de l'enceinte 7 du détecteur 1.

Typiquement, l'opération d'identification O5 comprend un calcul d'un paramètre géométrique de la distribution de l'énergie déposée par la particule alpha 3A, 3B dans le détecteur 1 de particules alpha 3A, 3B selon une direction du détecteur 1 de particules alpha 3A, 3B.

Par exemple, le paramètre géométrique est un coefficient d'aplatissement de la distribution de l'énergie déposée selon l'axe X ou l'axe Y, encore appelé kurtosis.

En effet, une particule alpha 3B qui traverse le détecteur 1 génère une distribution de charges selon l'axe X ou Y de l'anode 13, qui est plus « plate » que celle d'une particule alpha 3A qui est stoppée à l'intérieur de l'enceinte 7 du détecteur 1. Cette caractéristique est liée au fait que le dépôt d'énergie par unité de longueur est plus important en fin de parcours dans le gaz.

Le kurtosis correspond à une mesure du coefficient d'aplatissement d'une fonction ou d'une distribution. Plus cette dernière est plate et plus la valeur du kurtosis est faible.

Avantageusement, le kurtosis est calculé sur une plage de mesures excluant le pic de charge dû aux charges amplifiées dans le premier espace d'amplification 23. En effet, les charges correspondant au pic, par exemple sur la figure 3 autour de la position X = 0, subissent deux amplifications successives dans les espaces d'amplification 23 et 27. Le kurtosis est ainsi calculé seulement pour les charges qui subissent seulement l'amplification de l'espace d'amplification 27.

Par exemple, en se référant à la figure 3, le kurtosis est calculé en tenant compte de la distribution de charges comprises entre X=-1,3 cm et X=-0,15 cm, en excluant le pic de charge centré sur X=0 cm.

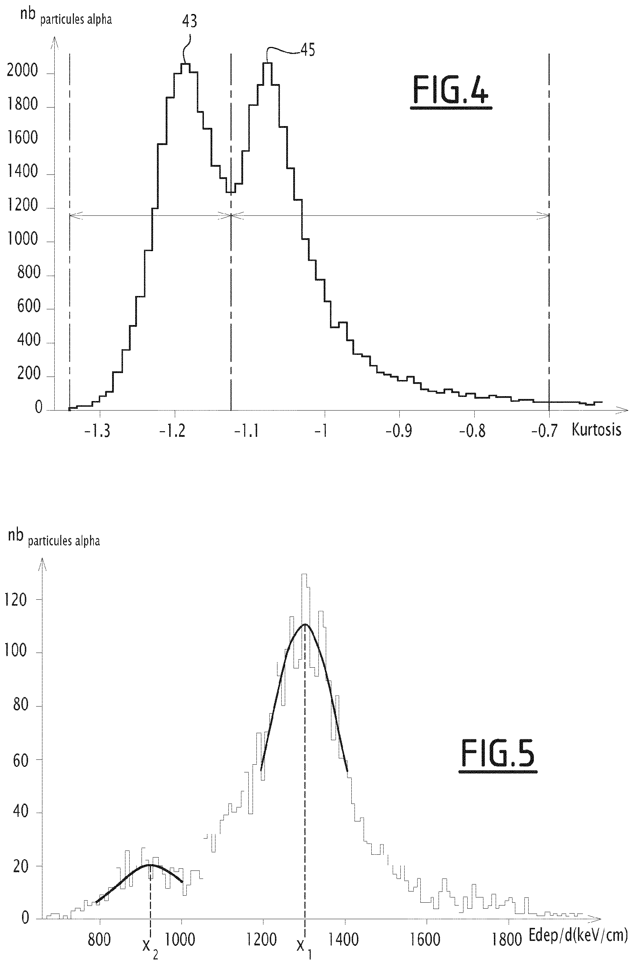

La figure 4 présente un exemple de distribution de la valeur du kurtosis pour une pluralité de particules alpha émises par l'échantillon, dont l'énergie déposée est mesurée par l'anode 13.

Deux distributions 43, 45 de tendance gaussienne sont visibles.

La première distribution 43 centrée sur -1,2 correspond aux particules alpha 3B qui ont traversé le détecteur 1 de part en part.

La deuxième distribution 45 centrée sur -1,08 correspond aux particules alpha 3A qui ont été calorimétrisées à l'intérieur de l'enceinte 7 du détecteur 1.

Comme visible sur la figure 4, les deux distributions 43, 45 se superposent et par conséquent pour certaines particules alpha 3A, 3B, il n'est pas possible à partir de la mesure du kurtosis de déterminer si les particules 3A, 3B ont traversé le détecteur 1 ou si elles ont été calorimétrisées à l'intérieur du détecteur 1.

Ainsi, typiquement, l'opération d'identification O5 des particules alpha 3A, 3B comprend l'application d'un seuil sur la valeur du kurtosis et la sélection des particules alpha 3A, 3B dont la valeur du kurtosis est inférieure ou égale au seuil.

Dans l'exemple de la figure 4, le seuil est par exemple fixé à -1,12. Ainsi, seules les particules alpha 3A, 3B présentant une valeur de kurtosis inférieure ou égale à -1,12 seront sélectionnées pour la suite du procédé.

La sous-étape D2 comprend alors typiquement une opération de mesure O6 de la longueur de la trajectoire parcourue par la particule alpha 3B à l'intérieur du détecteur 1 de particules alpha 3A, 3B, seules les particules alpha 3B traversant le détecteur 1 de part en part étant considérées durant cette opération.

Ainsi, pour chacune des distributions de charges mesurées selon l'axe X et l'axe Y de l'anode 13, comme par exemple la distribution présentée sur la figure 3, la plus petite coordonnée $x_{min}$, $y_{min}$ et la plus grande coordonnée $x_{max}$, $y_{max}$, pour lesquelles au moins une charge a été mesurée par l'anode 13 sont déterminées.

Les distances parcourues $dx$ et $dy$, respectivement selon l'axe X et l'axe Y sont alors calculées selon les relations :

$$dx = x_{max} - x_{min} \text{ et } dy = y_{max} - y_{min} \quad (15)$$

La longueur de la trajectoire $d$ est alors calculée en utilisant la relation :

$$d = \sqrt{dx^2 + dy^2 + dz^2} \quad (16)$$

La longueur $dz$ correspond à l'épaisseur du gaz traversée. Pour les particules alpha 3B ayant traversées le détecteur de part en part, cette épaisseur est connue car elle dépend directement des dimensions du détecteur 1.

Par exemple, pour le détecteur 1 décrit plus haut, l'épaisseur $dz$ vaut 1 cm.

Le procédé comprend alors une sous-étape de détermination D3, en utilisant l'énergie déposée déterminée, d'une énergie initiale de la particule alpha 3B avant la première interaction de la particule alpha 3A, 3B avec le milieu de détection du détecteur 1 de particules alpha 3A, 3B.

Dans le mode de réalisation préféré, l'énergie initiale de la particule alpha 3B est déterminée en utilisant l'énergie déposée mesurée et la longueur de la trajectoire mesurée.

Avantageusement, l'énergie initiale de la particule alpha 3B est déterminée en utilisant un ratio entre l'énergie déposée par la particule alpha 3B et la longueur de la trajectoire parcourue par ladite particule alpha 3B.

L'énergie initiale de la particule alpha 3B est par exemple déterminée en utilisant une relation de type exponentiel.

L'énergie initiale $E$ de la particule alpha 3B est typiquement déterminée en utilisant la relation suivante :

$$E\left(\frac{E_{dep}}{d}\right) = a \times \left(\frac{E_{dep}}{d}\right)^b \quad (17)$$

$E_{dep}$ est l'énergie déposée par la particule alpha 3B considérée.

$d$ est la longueur de la trajectoire parcourue par la particule alpha.

$a$ et $b$ sont deux coefficients.

Avantageusement, le procédé comprend, avant l'étape E1, une étape de calibration E0 de ladite énergie initiale de la particule alpha 3B en utilisant une source de calibration.

Dans le cas où l'énergie initiale de la particule alpha 3B est reliée au ratio entre l'énergie déposée par la particule alpha 3B et la longueur de la trajectoire parcourue par ladite particule alpha 3B selon la relation (17), l'étape de calibration E0 permet de déterminer les coefficients $a$ et $b$.

La calibration est typiquement réalisée pour chaque acquisition, c'est-à-dire avant l'analyse de chaque échantillon 5.

La source de calibration contient typiquement au moins deux pics énergétiques $E_{cal1}$ et $E_{cal2}$ de rayonnement alpha distincts, par exemple entre 4000 keV et 8000 keV.

Par « distinct », on entend que les deux pics énergétiques soient au moins séparés de 1000 keV.

La source de calibration est par exemple une source de radium 226.

Le spectre énergétique de la source de calibration au radium 226 comprend un premier pic énergétique $E_{cal1}$ à 4800 keV (correspondant au radium 226) et un deuxième pic énergétique $E_{cal2}$ à 7700 keV (correspondant au polonium 214, descendant du radium 226 dans la chaîne de désintégration).

Pour déterminer les coefficients $a$ et $b$, il convient alors de résoudre le système d'équations suivant :

$$\begin{cases} a \times x_1^b = E_{cal1} = 4800 \ keV \\ a \times x_2^b = E_{cal2} = 7700 \ keV \end{cases} \quad (18)$$

$x_1$ et $x_2$ correspondent respectivement aux valeurs de $\frac{E_{dep}}{d}$ associées aux énergies $E_{cal1}$ et $E_{cal2}$.

La figure 5 représente la distribution de $\frac{E_{dep}}{d}$ pour la source de calibration de radium 226 mesurée avec le détecteur 1.

La distribution présente deux pics de $\frac{E_{dep}}{d}$ distincts, correspondant aux pics énergétiques à 4800 keV et à 7700 keV de la source de calibration de radium 226.

La formule de Bethe et la courbe de Bragg de dépôt d'énergie des particules alpha dans la matière, connues de l'homme du métier, traduisent le fait que plus l'énergie de la particule alpha augmente, plus le dépôt d'énergie par unité de longueur est faible. Ainsi, chacun des deux pics de $\frac{E_{dep}}{d}$ peut être associé au pic énergétique correspondant.

Les valeurs $x_1$ et $x_2$ sont déterminées après un ajustement de deux fonctions gaussiennes sur la distribution.

Dans l'exemple de la figure 5, les valeurs $x_1$ et $x_2$ correspondant respectivement aux valeurs de $\frac{E_{dep}}{d}$ associées aux énergies $E_{cal1}$ et $E_{cal2}$ sont $x_1$ = 1295 $keV/cm$ et $x_2$ = 912 $keV/cm$.

Ces valeurs permettent alors de déterminer les coefficients $a$ et $b$ qui valent dans l'exemple considéré $a$ = 7,51.10$^7$ et $b$ = -1,34 par résolution du système d'équations mentionné plus haut.

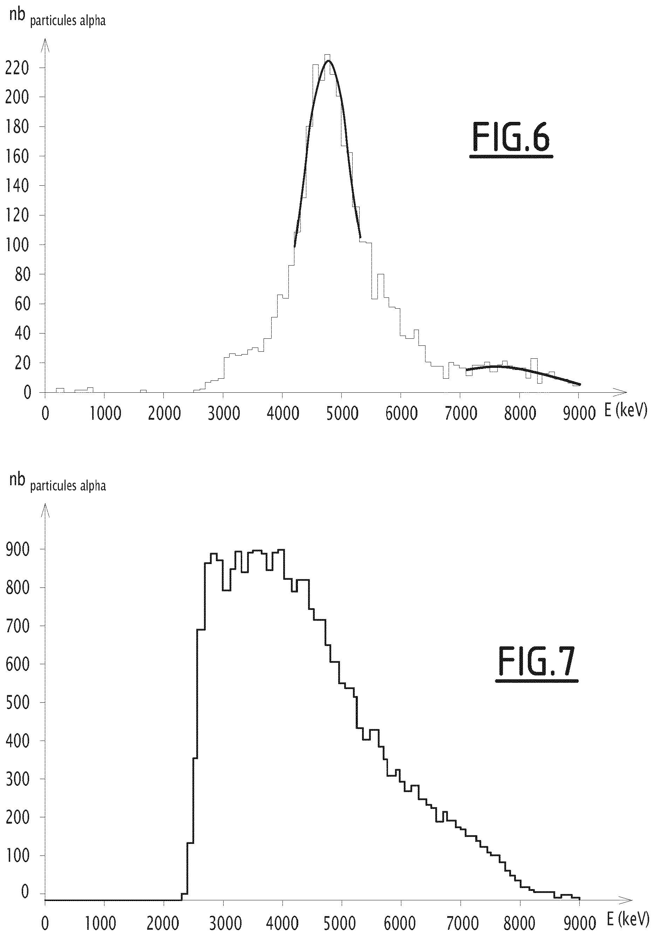

La figure 6 présente le spectre en énergie de la source de calibration de radium après application des coefficients de calibration. Les pics énergétiques sont alors centrés sur $E_{cal1}$ = 4800 $keV$ et $E_{cal2}$ = 7700 $keV$.

Le procédé comprend alors pour au moins une zone de l'image autoradiographique, une étape de construction E2 d'un spectre en énergie en utilisant les énergies initiales déterminées des particules alpha 3B correspondantes.

Le spectre en énergie représente la distribution des énergies initiales de l'ensemble des particules alpha 3B déterminées au cours de l'étape E1 du procédé.

Pour chaque particule alpha 3B détectée, une position moyenne X0$_i$, Y0$_i$ appartenant au champ de vue du détecteur 1 et une énergie initiale E$_i$ associée sont déterminées, selon le procédé décrit précédemment.

Typiquement, le procédé comprend, pour une série de K particules alpha 3B détectées durant une acquisition, le stockage sous forme matricielle des positions moyennes X0$_i$, Y0$_i$ et des énergies initiales E$_i$ associées.

La zone de l'image autoradiographique pour laquelle le spectre en énergie est construit au cours de l'étape E2 est typiquement une portion du champ de vue du détecteur 1, couramment dénommée zone d'intérêt.

La construction du spectre est alors effectuée en utilisant un sous-ensemble des K particules alpha 3B pour lesquelles les positions moyennes X0$_i$, Y0$_i$ respectives sont comprises dans la zone d'intérêt.

La zone d'intérêt est typiquement une surface à deux dimensions d'aire non nulle appartenant à l'anode 13, dans le cas du détecteur 1 gazeux décrit précédemment.

La zone d'intérêt a typiquement une forme quelconque, par exemple circulaire ou ellipsoïdale.

Avantageusement, l'étape de construction E2 est réalisée pour toute zone appartenant au champ de vue du détecteur 1.

En variante, non couvert par la présente invention, le détecteur 1 est un détecteur à semi-conducteur.

Le milieu de détection est désormais un semi-conducteur monolithique ou composé de plusieurs briques agencées en matrices.

L'échantillon 5 et le milieu de détection sont typiquement séparés par un espace de vide avantageusement le plus fin possible pour favoriser la localisation spatiale du point d'émission en réduisant l'effet de parallaxe. Par conséquent, les particules alpha 3A, 3B émises par l'échantillon perdent très peu d'énergie avant l'interaction avec le détecteur et la totalité de l'énergie des particules alpha est déposée dans le milieu semi-conducteur. Les signaux sont mesurés sur les pavés 31. La localisation de leur point d'émission est simultanément possible.

Toutes les particules alpha 3A, 3B interagissent avec le détecteur 1. Ainsi, aucune opération de sélection des particules alpha n'est requise.

Le signal incident mesuré par les pavés 31 est une charge électronique en mouvement.

Par polarisation du milieu semi-conducteur, un courant électrique proportionnel à l'énergie déposée par la particule alpha incidente est induit sur les pavés 31.

En variante encore, non couvert par la présente invention, le détecteur est un scintillateur sous forme solide, liquide ou gazeux.

L'échantillon 5 est idéalement mis au contact du détecteur scintillateur. La particule alpha émise par l'échantillon 5 dépose son énergie dans le milieu scintillant (gaz, liquide, solide). Des photons de scintillations sont alors émis.

Les cellules de mesure 29 comprennent typiquement des photo-détecteurs, par exemple des photo-détecteurs SiPM.

Le signal incident mesuré par les cellules de mesure 29 comprend au moins un photon.

Les photo-détecteurs sont adaptés pour convertir les photons émis par l'interaction entre la particule alpha 3A, 3B et le milieu scintillant en un courant électrique.

Ainsi, grâce au procédé selon l'invention, il est possible à la fois de cartographier la surface de l'échantillon 5 et d'identifier à partir des spectres en énergie construits la nature du radioélément émetteur alpha et sa position au sein de l'échantillon.

La zone de l'image autoradiographique pour laquelle le spectre en énergie est construit au cours de l'étape E2 est typiquement une portion du champ de vue du détecteur 1, couramment dénommée zone d'intérêt.

La construction du spectre est alors effectuée en utilisant un sous-ensemble des K particules alpha 3B pour lesquelles les positions moyennes X0$_i$, Y0$_i$ respectives sont comprises dans la zone d'intérêt.

La zone d'intérêt est typiquement une surface à deux dimensions d'aire non nulle appartenant à l'anode 13, dans le cas du détecteur 1 gazeux décrit précédemment.

La zone d'intérêt a typiquement une forme quelconque, par exemple circulaire ou ellipsoïdale.

Avantageusement, l'étape de construction E2 est réalisée pour toute zone appartenant au champ de vue du détecteur 1.

En variante, le détecteur 1 est un détecteur à semi-conducteur.

Le milieu de détection est désormais un semi-conducteur monolithique ou composé de plusieurs briques agencées en matrices.

L'échantillon 5 et le milieu de détection sont typiquement séparés par un espace de vide avantageusement le plus fin possible pour favoriser la localisation spatiale du point d'émission en réduisant l'effet de parallaxe. Par conséquent, les particules alpha 3A, 3B émises par l'échantillon perdent très peu d'énergie avant l'interaction avec le détecteur et la totalité de l'énergie des particules alpha est déposée dans le milieu semi-conducteur. Les signaux sont mesurés sur les pavés 31. La localisation de leur point d'émission est simultanément possible.

Toutes les particules alpha 3A, 3B interagissent avec le détecteur 1. Ainsi, aucune opération de sélection des particules alpha n'est requise.

Le signal incident mesuré par les pavés 31 est une charge électronique en mouvement.

Par polarisation du milieu semi-conducteur, un courant électrique proportionnel à l'énergie déposée par la particule alpha incidente est induit sur les pavés 31.

En variante encore le détecteur est un scintillateur sous forme solide, liquide ou gazeux.

L'échantillon 5 est idéalement mis au contact du détecteur scintillateur. La particule alpha émise par l'échantillon 5 dépose son énergie dans le milieu scintillant (gaz, liquide, solide). Des photons de scintillations sont alors émis.

Les cellules de mesure 29 comprennent typiquement des photo-détecteurs, par exemple des photo-détecteurs SiPM.

Le signal incident mesuré par les cellules de mesure 29 comprend au moins un photon.

Les photo-détecteurs sont adaptés pour convertir les photons émis par l'interaction entre la particule alpha 3A, 3B et le milieu scintillant en un courant électrique.

Ainsi, grâce au procédé selon l'invention, il est possible à la fois de cartographier la surface de l'échantillon 5 et d'identifier à partir des spectres en énergie construits la nature du radioélément émetteur alpha et sa position au sein de l'échantillon.

**Revendications**

1. Procédé d'analyse à l'aide d'un détecteur (1) de particules alpha (3A, 3B), d'un échantillon (5) comprenant au moins un radionucléide émetteur d'une pluralité de particules alpha (3A, 3B), le détecteur (1) comprenant un milieu de détection et une pluralité de cellules de mesure (29) adaptées pour mesurer au moins un signal incident généré par une interaction de la particule alpha (3A, 3B) avec ledit milieu de détection, le détecteur (1) étant conçu pour fournir une image autoradiographique dudit échantillon (5), le détecteur (1) de particules alpha (3A, 3B) étant un détecteur gazeux et le signal incident étant une charge en mouvement, le procédé étant **caractérisé en ce qu'**il comprend les étapes suivantes :

   - E1) dans laquelle on détermine une énergie initiale de chaque particule alpha (3A, 3B), ladite étape de détermination (E1) comprenant une répétition des sous-étapes suivantes pour chaque particule alpha (3A, 3B) :

      - D1) dans laquelle on détermine la position de la première interaction de la particule alpha (3A, 3B) avec le milieu de détection du détecteur (1) en utilisant au moins une cellule de mesure (29),
      - D2) dans laquelle on détermine une énergie déposée par la particule alpha (3A, 3B) à l'intérieur du détecteur (1) en utilisant le signal incident mesuré,
      - D3) dans laquelle on détermine, en utilisant l'énergie déposée déterminée à la sous-étape (D2), l'énergie initiale de la particule alpha (3A, 3B) avant la première interaction de la particule alpha (3A, 3B) avec le milieu de détection du détecteur (1),

      - E2) dans laquelle pour au moins une zone de l'image autoradiographique, on construit un spectre en énergie en utilisant les énergies initiales déterminées des particules alpha (3A, 3B) correspondantes.

2. Procédé selon la revendication 1, dans lequel la sous-étape (D1) comprend au moins une opération d'amplification (O1, O2) d'une interaction de la particule alpha (3A, 3B) avec le milieu de détection du détecteur (1) à l'aide d'au moins un champ électrique.

3. Procédé selon la revendication 1 ou 2, dans lequel, avant l'étape (E1), on réalise une étape de calibration (E0) de ladite énergie initiale de la particule alpha (3B) en utilisant une source de calibration.

**4.** Procédé selon l'une quelconque des revendications 1 à 3, dans lequel la position de la première interaction de la particule alpha (3A, 3B) avec le milieu de détection du détecteur (1) est déterminée à partir d'une répartition d'une pluralité de signaux incidents mesurés par les cellules de mesure (29).

**5.** Procédé selon l'une quelconque des revendications 1 à 4, dans lequel la sous-étape (D2) comprend une opération de mesure (O4) de charges (41, 36) générées successivement le long de la trajectoire de la particule alpha (3A, 3B) à l'intérieur du détecteur (1), et

une opération de mesure (O6) de la longueur de la trajectoire parcourue par la particule alpha (3A, 3B) à l'intérieur du détecteur (1) de particules alpha (3A, 3B),
l'énergie initiale de la particule alpha (3A, 3B) étant déterminée en utilisant l'énergie déposée déterminée et la longueur de la trajectoire mesurée.

**6.** Procédé selon la revendication 5, comprenant préalablement à l'opération de mesure (O6) de la longueur de la trajectoire de la particule alpha (3A, 3B), une opération d'identification (O5) des particules alpha (3B) ayant traversé le détecteur (1) de particules alpha (3A, 3B) de part en part, étant entendu que seules les particules alpha (3B) ayant traversé le détecteur (1) de part en part sont considérées à l'étape (E2) de construction des spectres en énergie.

**7.** Procédé selon la revendication 6, dans lequel l'opération d'identification (O5) comprend un calcul d'un paramètre géométrique d'une distribution des charges mesurées dans le détecteur (1) de particules alpha (3A, 3B) selon une direction du détecteur (1) de particules alpha (3A, 3B).

**8.** Procédé selon la revendication 7, dans lequel le paramètre géométrique est un coefficient d'aplatissement de la distribution des charges mesurées.

**9.** Procédé selon la revendication 8, dans lequel l'opération d'identification (O5) comprend l'application d'un seuil sur le coefficient d'aplatissement de la distribution des charges mesurées et la sélection des particules alpha ayant un coefficient d'aplatissement inférieur audit seuil.

**10.** Procédé selon l'une quelconque des revendications 5 à 9, dans lequel l'énergie initiale de la particule alpha (3B) est déterminée en utilisant un ratio entre l'énergie déposée par la particule alpha (3B) et la longueur de la trajectoire parcourue par ladite particule alpha (3B).

**11.** Procédé selon la revendication 10, dans lequel l'énergie initiale de la particule alpha (3A, 3B) est déterminée en reliant ladite énergie initiale au ratio entre l'énergie déposée par la particule alpha (3B) et la longueur de la trajectoire parcourue par ladite particule alpha (3B) par une relation de type exponentiel.

**12.** Procédé selon la revendication 11, dans lequel la relation de type exponentiel répond à la formule :

$$E\left(\frac{E_{dep}}{d}\right) = a \times \left(\frac{E_{dep}}{d}\right)^{b}$$

• $E_{dep}$ étant l'énergie déposée par la particule alpha (3B) considérée,
• d étant la longueur de la trajectoire parcourue par la particule alpha (3B),
• $a$ et $b$ étant des coefficients.

**Patentansprüche**

**1.** Verfahren zur Analyse einer Probe (5) mit Hilfe eines Detektors (1) für Alphateilchen (3A, 3B), der mindestens einen Radionuklidsender für eine Vielzahl von Alphateilchen (3A, 3B) umfasst, wobei der Detektor (1) ein Detektionsmedium und eine Mehrzahl von Messzellen (29) umfasst, die angepasst sind, mindestens ein einfallendes Signal zu messen, das durch eine Wechselwirkung des Alphateilchens (3A, 3B) mit dem Detektionsmedium erzeugt wird, wobei der Detektor (1) ausgebildet ist, ein autoradiographisches Bild der Probe (5) zu liefern, wobei der Detektor (1) für Alphateilchen (3A, 3B) ein gasförmiger Detektor ist und das einfallende Signal eine bewegte Ladung ist, wobei das Verfahren **dadurch gekennzeichnet ist, dass** es die folgenden Schritte umfasst:

- E1), bei dem eine Anfangsenergie jedes Alphateilchens (3A, 3B) bestimmt wird, wobei der Bestimmungsschritt (E1) eine Wiederholung der folgenden Unterschritte für jedes Alphateilchen (3A, 3B) umfasst:

> - D1), bei dem die Position der ersten Wechselwirkung des Alphateilchens (3A, 3B) mit dem Detektionsmedium des Detektors (1) unter Verwendung mindestens einer Messzelle (29) bestimmt wird,
> - D2), bei dem die von den Alphateilchen (3A, 3B) im Inneren des Detektors (1) deponierte Energie unter Verwendung des gemessenen einfallenden Signals bestimmt wird,
> - D3), bei dem die Anfangsenergie des Alphateilchens (3A, 3B) vor der ersten Wechselwirkung des Alphateilchens (3A, 3B) mit dem Detektionsmedium des Detektors (1) unter Verwendung der im Teilschritt (D2) ermittelten deponierten Energie bestimmt wird,
> - E2), bei dem für mindestens einen Bereich des autoradiographischen Bildes ein Energiespektrum unter Verwendung der ermittelten Anfangsenergien der entsprechenden Alphateilchen (3A, 3B) erstellt wird.

2. Verfahren nach Anspruch 1, bei dem der Teilschritt (D1) mindestens einen Vorgang der Verstärkung (O1, O2) einer Wechselwirkung des Alphateilchens (3A, 3B) mit dem Detektionsmedium des Detektors (1) mittels mindestens eines elektrischen Feldes umfasst.

3. Verfahren nach Anspruch 1 oder 2, bei dem vor dem Schritt (E1) ein Kalibrierungsschritt (E0) der Anfangsenergie des Alphateilchens (3B) unter Verwendung einer Kalibrierungsquelle durchgeführt wird.

4. Verfahren nach einem beliebigen der Ansprüche 1 bis 3, bei dem die Position der ersten Wechselwirkung des Alphateilchens (3A, 3B) mit dem Detektionsmedium des Detektors (1) aus einer Verteilung einer Vielzahl von durch die Messzellen (29) gemessenen einfallenden Signalen bestimmt wird.

5. Verfahren nach einem beliebigen der Ansprüche 1 bis 4, bei dem der Teilschritt (D2) einen Messvorgang (04) von Ladungen (41, 36), die aufeinanderfolgend entlang der Bahn des Alphateilchens (3A, 3B) im Inneren des Detektors (1) erzeugt werden, und

> einen Vorgang zum Messen (06) der Länge der Bahn, die das Alphateilchen (3A, 3B) innerhalb des Detektors (1) für Alphateilchen (3A, 3B) zurücklegt, umfasst,
> wobei die Anfangsenergie des Alphateilchens (3A, 3B) unter Verwendung der ermittelten deponierten Energie und der gemessenen Länge der Bahn bestimmt wird.

6. Verfahren nach Anspruch 5, das vor dem Vorgang des Messens (06) der Länge der Bahn des Alphateilchens (3A, 3B) einen Vorgang des Identifizierens (05) der Alphateilchen (3B) umfasst, die den Detektor (1) für Alphateilchen (3A, 3B) von einer Seite zur anderen durchquert haben, wobei es sich versteht, dass nur die Alphateilchen (3B), die den Detektor (1) von einer Seite zur anderen durchquert haben, in dem Schritt (E2) des Erstellens der Energiespektren berücksichtigt werden.

7. Verfahren nach Anspruch 6, bei dem der Vorgang des Identifizierens (05) die Berechnung eines geometrischen Parameters einer Verteilung von Ladungen umfasst, die in dem Detektor (1) für Alphateilchen (3A, 3B) gemäß einer Richtung des Detektors (1) für Alphateilchen (3A, 3B) gemessen werden.

8. Verfahren nach Anspruch 7, bei dem der geometrische Parameter ein Wölbungskoeffizient der Verteilung der gemessenen Ladungen ist.

9. Verfahren nach Anspruch 8, bei dem der Identifizierungsvorgang (05) die Anwendung eines Schwellenwerts auf den Wölbungskoeffizienten der Verteilung der gemessenen Ladungen und die Auswahl derjenigen Alphateilchen umfasst, deren Wölbungskoeffizient unter dem Schwellenwert liegt.

10. Verfahren nach einem der Ansprüche 5 bis 9, bei dem die Anfangsenergie des Alphateilchens (3B) unter Verwendung eines Verhältnisses zwischen der von dem Alphateilchen (3B) deponierten Energie und der Länge der von dem Alphateilchen (3B) durchlaufenen Bahn bestimmt wird.

11. Verfahren nach Anspruch 10, bei dem die Anfangsenergie des Alphateilchens (3A, 3B) bestimmt wird, indem die Anfangsenergie mit dem Verhältnis zwischen der von dem Alphateilchen (3B) deponierten Energie und der Länge der von dem Alphateilchen (3B) durchlaufenen Bahn durch eine Beziehung vom Exponentialtyp verknüpft wird.

**12.** Verfahren nach Anspruch 11, bei dem die Beziehung vom Exponentialtyp der Formel entspricht:

$$E\left(\frac{E_{dep}}{d}\right) = a \times \left(\frac{E_{dep}}{d}\right)^{b}$$

- wobei $E_{dep}$ die von dem betrachteten Alphateilchen (3B) abgegebene Energie ist,
- $d$ die Länge der vom Alphateilchen zurückgelegten Bahn ist (3B),
- $a$ und $b$ Koeffizienten sind.

**Claims**

**1.** A method for analyzing, using a detector (1) of alpha particles (3A, 3B), a sample (5) comprising at least one radionuclide emitter of a plurality of alpha particles (3A, 3B), the detector (1) comprising a detection medium and a plurality of measurements cells (29) adapted for measuring at least one incident signal generated by an interaction of an alpha particle (3A, 3B) with said detection medium, the detector (1) being configured to deliver an autoradiographic image of said sample (5), the detector (1) of alpha particles (3A, 3B) is a gaseous detector and the incident signal is a moving charge, the method comprising the following steps:

- E1) determining an initial energy of each alpha particle (3A, 3B), said determining step (E1) comprising repeating the following sub-steps for each alpha particle (3A, 3B):

  - D1) determining a position of a first interaction of an alpha particle (3A, 3B) with the detection medium of the detector (1) by using at least one measurement cell (29),
  - D2) determining an energy deposited by the particle (3A, 3B) in the interior of the detector (1) by using the measured incident signal,
  - D3) determining, by using the deposited energy determined in sub-step (D2), the initial energy of the alpha particle (3A, 3B) before the first interaction of the alpha particle (3A, 3B) with the detection medium of the detector (1),

- E2) for at least one zone of the autoradiographic image, constructing an energy spectrum using the determined initial energies of the corresponding alpha particles (3A, 3B).

**2.** The method according to claim 1, wherein sub-step (D1) comprises at least one operation for amplifying (O1, O2) an interaction of the alpha particle (3A, 3B) with the detection medium of the detector (1) using at least one electric field.

**3.** The method according to claim 1 or 2, wherein, before step (E1), a calibration step (E0) of said initial energy of the alpha particle (3B) is carried out using a calibration source.

**4.** The method according to any one of claims 1 to 3, wherein the position of the first interaction of the alpha particle (3A, 3B) with the detection medium of the detector (1) is determined from a distribution of a plurality of incident signals measured by the measurement cells (29).

**5.** The method according to any one of claims 1 to 4, wherein sub-step (D2) comprises an operation for measuring (O4) charges (41, 36) generated successively along the path of the alpha particle (3A, 3B) inside the detector (1), and

an operation for measuring (O6) the length of the path traveled by the alpha particle (3A, 3B) inside the detector (1) of alpha particles (3A, 3B),
the initial energy of the alpha particle (3A, 3B) being determined by using the determined deposited energy and the length of the measured path,

**6.** The method according to claim 5, comprising, before the operation for measuring (O6) the length of the path of the alpha particle (3A, 3B), an operation for identifying (O5) alpha particles (3B) having passed all the way through the detector (1) of alpha particles (3A, 3B), with the understanding that only the alpha particles (3B) having passed all the way through the detector (1) are considered in step (E2) for constructing energy spectrums.

**7.** The method according to claim 6, wherein the identification operation (O5) comprises a calculation of a geometric parameter of a distribution of the charges measured in the detector (1) of alpha particles (3A, 3B) along a direction of the detector (1) of alpha particles (3A, 3B).

8. The method according to claim 7, wherein the geometric parameter is a flattening coefficient of the distribution of the measured charges.

9. The method according to claim 8, wherein the identification operation (O5) comprises the application of a threshold to the flattening coefficient of the distribution of the measured charges and the selection of the alpha particles having a flattening coefficient below said threshold.

10. The method according to any one of claims 5 to 9, wherein the initial energy of the alpha particle (3B) is determined by using the ratio between the energy deposited by the alpha particle (3B) and the length of the path traveled by said alpha particle (3B).

11. The method according to claim 10, wherein the initial energy of the alpha particle (3A, 3B) is determined by connecting said initial energy to the ratio between the energy deposited by the alpha particle (3B) and the length of the path traveled by said alpha particle (3B) by a relationship of the exponential type.

12. The method according to claim 11, wherein the exponential-type relationship satisfies the formula:

$$E\left(\frac{E_{dep}}{d}\right) = a \times \left(\frac{E_{dep}}{d}\right)^{b}$$

• $E_{dep}$ being the energy deposited by the alpha particle (3B) in question,
• $d$ being the length of the path traveled by the alpha particle (3B),
• $a$ and $b$ being coefficients.

FIG.1

$\underline{\text{FIG.2}}$

$\underline{\text{FIG.3}}$

FIG.4

FIG.5

nb particules alpha

## FIG.6

nb particules alpha

## FIG.7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2011039473 A1

**Littérature non-brevet citée dans la description**

- **SARDINI et al.** Quantitative autoradiography of alpha particle emission in geo-materials using the Beaver™ system. *Nuclear Instruments & Methods in Physics Research,* 2016, vol. 833, 15-22